(19) **Europäisches Patentamt**

**European Patent Office**

**Office européen des brevets**

(11) Veröffentlichungsnummer: **0 348 381 B1**

(12) # EUROPÄISCHE PATENTSCHRIFT

(45) Veröffentlichungstag der Patentschrift: **03.11.93**

(21) Anmeldenummer: **89890164.0**

(22) Anmeldetag: **15.06.89**

(51) Int. Cl.⁵: **B29C 47/08**, B21J 5/00

(54) Verbundstahlwerkstück und Verfahren zu seiner Herstellung.

(30) Priorität: **20.06.88 AT 1595/88**

(43) Veröffentlichungstag der Anmeldung:
**27.12.89 Patentblatt 89/52**

(45) Bekanntmachung des Hinweises auf die
Patenterteilung:
**03.11.93 Patentblatt 93/44**

(84) Benannte Vertragsstaaten:
**AT BE CH DE ES FR GB GR IT LI LU NL SE**

(56) Entgegenhaltungen:
**EP-A- 0 052 092**
**NL-A- 8 003 332**
**US-A- 3 913 208**
**US-A- 3 945 555**

(73) Patentinhaber: **BÖHLER EDELSTAHL GmbH**
**Mariazellerstrasse 25**
**A-8605 Kapfenberg(AT)**

(72) Erfinder: **Kroisenbrunner, Walter**
**Burgstallweg 30**
**A-8605 Kapfenberg(AT)**

(74) Vertreter: **Wildhack, Helmut, Dipl.-Ing. Dr. et al**
**Patentanwälte Dipl.-Ing. Leo Brauneiss**
**Dipl.-Ing. Dr. Helmut Wildhack**
**Landstrasser Hauptstrasse 50**
**Postfach 281**
**A-1031 Wien (AT)**

## Beschreibung

Die Erfindung betrifft ein Verbundstahlwerkstück bzw. einen Maschinenteil mit zumindest einer in Längsrichtung verlaufenden Ausnehmung umfassend eine, vorzugsweise zumindest über einen Teil ihrer Außenfläche zylindrisch geformte Trägerhülse und eine die Ausnehmung(en) entlang ihres Umfanges begrenzende verschleiß- und/oder korrosionsbeständigen Auskleidung, welche unter Ausbildung eines z.B. durch Pressen, Walzen od.dgl. hergestellten Metallverbundes bzw. einer metallischen Bindung mit der Trägerhülse verbunden ist (sind). Ferner betrifft die Erfindung ein Verfahren zur Herstellung derartiger Verbundstahlwerkstücke.

Ziel der Erfindung ist es, ein einfach durchzuführendes Verfahren zur Herstellung von Verbundstahlwerkstücken zu schaffen, welche innenseitig korrosions- und/oder verschleißfest sind und allen an sie während des Betriebes gestellten Anforderungen entsprechen. Insbesondere sollen die Verbundwerkstücke den in der Praxis an sie gestellten Form- bzw. Gestaltungsansprüchen gerecht werden und trotzdem die nötige Festigkeit besitzen. Derartige Verbundwerkstücke bzw. Maschinenteile sind durch die in der Größenordnung von 1000 bis 2000 bar sich ergebenden Innendrücke, die oftmals hohe Korrosionsbeanspruchung und nicht zuletzt durch die z.B. im Rahmen der Kunststoffverarbeitung gebräuchlichen Füllstoffe einem sehr hohen Verschleiß unterworfen. Es hat sich gezeigt, daß gewisse Füllstoffe, wie z.B. Glasfasern, die Standzeiten dieser Teile bis auf 1/10 des ursprünglichen Wertes absenken können. Zumal bei Spritzgußmaschinen etwa 0,25 mm als maximal zulässiges Spiel zwischen Schnecke und Zylinder gelten, kann man ermessen, welche Bedeutung der Verschleißfaktor besitzt und es wurden demgemäß seitens der Maschinenhersteller schon große Anstrengungen zur Lösung dieses technischen Problems unternommen.

Aus der EP-A-0052092 ist ein Verfahren zur Herstellung von ausgekleideten Maschinenhohlzylindern bekannt, wobei ein zylindrischer Stahlkern und ein ebensolches Rohr miteinander zur Bildung einer metallischen Bindung zwischen Kern und Hülse verformt werden. Anschließend erfolgt zentrisch in den Kern ein Einbringen einer Bohrung. Bei einem solchen Verfahren sind die Beibehaltung von kreisrunden Querschnittsformen und die Achssymmetrie von Kern und Hüllenrohr bei ausschließlicher Längserstreckung des Materials bzw. des Rohlings wichtige Erfordernisse. Eine überlagerte, gegebenenfalls bei jedem Verformungsschritt auftretende, Torsion kann dabei unberücksichtigt bleiben. Werden jedoch keine achssymmetrischen bzw. von einer Kreisform abweichende Querschnittsformen der ausgekleideten Ausnehmungen, z.B. für Mehrfachschneckenzylinder oder im Bezug auf die Mitte der Trägerhülse exzentrisch angeordnete Auskleidungen gefordert, so sind eine achsparallele Ausrichtung sowie eine bestimmte und runde Querschnittsformerteilung oder eine Erhaltung der Querschnittsform und/oder einer exzentrischen Lage des Kernes im Rohling bei dessen Verformung weitere Ziele.

Dieses Ziel wird bei einem Verbundstahlwerkstück der eingangs genannten Art dadurch erreicht, daß insbesondere zur Ausbildung eines Doppel- oder Mehrfachschneckenzylinders für die Kunststoffverarbeitung, die im Verbundstahlwerkstück ausgebildete Ausnehmung eine von einer Kreisform abweichende Querschnittsform , z.B. die Form von zwei sich überlappenden Kreisen, aufweist und daß die Metallverbundfläche zwischen der ebenfalls im Schnitt von Kreisform abweichenden Auskleidung und der Trägerhülse längs ihres Umfanges unterschiedliche Normalabstände von der Umfangsfläche der Trägerhülse besitzt, wobei alternativ vorgesehen sein kann, daß die im Verbundstahlwerkstück ausgebildete kreisförmige Ausnehmung in Bezug auf die Mitte der Trägerhülse exzentrisch angeordnet ist und die Metallverbundfläche zwischen der ebenfalls im Schnitt Kreisform aufweisenden Auskleidung und der Trägerhülse längs ihres Umfanges unterschiedliche Normalabstände von der Umfangsfläche der Trägerhülse besitzt.

Ein Verfahren gemäß des EP-A-0052092 ist erfindungsgemäß dadurch gekennzeichnet, daß insbesondere zur Ausbildung eines Doppel- oder Mehrfachschneckenzylinders aus Verbundstahl für die Kunststoffverarbeitung an der(den) Stelle(n) der gewünschten Ausnehmung(en) im Maschinenteil der Rohling mit zumindest einem Kern versehen und gemeinsam mit dem(n) Kern(en) einer Verformung bei höherer Temperatur, insbesondere Querschnittsverringerung, unterworfen wird, bei welcher dem(n) Kern(en) in einer Trägerhülse eine von Kreisform abweichende Querschnittsform erteilt oder alternativ ein kreisförmiger Kern mit einer bezüglich des Mittelpunktes der Trägerhülse exzentrischen bzw. bezüglich der Umfangsfläche der Trägerhülse unterschiedliche Abstände besitzenden Lage hervorgeht, und daß in dem(n) Kern(en) die Ausnehmung(en) ausgebildet wird(werden).

Mit den erfindungsgemäßen Verbundstahlwerkstücken kann im wesentlichen allen in der Praxis an sie gestellten Form- und Festigkeitswünschen entsprochen werden.

Bevorzugte Ausführungsformen der Erfindung sind der folgenden Beschreibung, den Zeichnungen und den Unteransprüchen zu entnehmen.

Im folgenden wird die Erfindung anhand der Zeichnung beispielsweise näher erläutert. Es zeigen Fig. 1a, 1b, 1c sowie Fig. 2a und 2b sowie Fig. 3a und 3c verschiedenen Stufen des Herstellungsverfahrens bzw. verschiedene Verbundstahlwerkstücke im Schnitt; Fig. 4 und 5 zeigen verschiedene Ausgangswerkstücke und Endprodukte im Schnitt und Fig. 6 zeigt schematisch eine Anlage zur Durchführung des erfindungsgemäßen Verfahrens.

Das erfindungsgemäße Verfahren geht von der Herstellung eines Rohlinges mit einer Fertigung einer Trägerhülse aus, die mit einem Kern versehen wird, worauf die mit dem Kern versehene Trägerhülse einer Querschnittsverminderung bei erhöhter Temperatur unterworfen wird, um einen Metallverbund zwischen dem Kern und der Trägerhülse zu erreichen. Dazu wird in einen Metallbarren bzw. ein Metallprofil als Trägerhülse ein Loch ( oder mehrere Löcher) gebohrt bzw. eingearbeitet, in welche(s) eine bzw. mehrere Metallstange(n) als Kern(e) genau passend eingesetzt (wird) werden, nachdem die Innenflächen der Trägerhülse und die Außenoberfläche des(r) Kerne(s) gereinigt wurden. Nach Anlegen eines Vakuums werden die Enden der Trägerhülse luftdicht verschlossen, um eine Oxidation bei der darauffolgenden Warmbearbeitung zu vermeiden und bei der entsprechenden Bearbeitungstemperatur, vorzugsweise etwa 1000 bis 1260° C, den Metallverbund herzustellen.

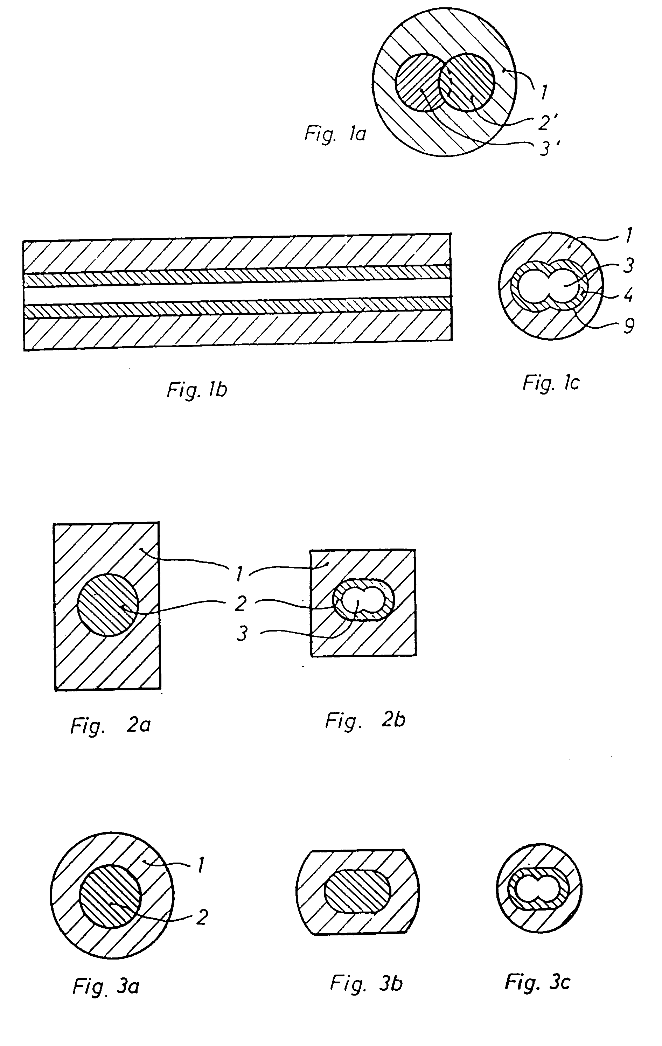

Fig. 1a zeigt den Schnitt durch einen Verbundstahlzylinder für die Kunststoffverarbeitung mit einer Trägerhülse 1 mit einem eingesetzten zweiteiligen Kern 2', 3'. Dieses Werkstück wurde hergestellt, indem in einem zylindrischen Metallbarren exzentrisch ein Loch gebohrt wurde, daraufhin in diese Bohrung ein Kern 3' eingesetzt wurde, und im folgenden eine die angebrachte Bohrung überlappende weitere Bohrung angebracht wurde. Der bei der Anbringung der weiteren Bohrung teilweise abgearbeitete Kern 3' und ein weiterer Kern 2' wurden ebenso wie die Innenfläche der Bohrungen gereinigt ( z.B. mit Alkohol, Trichloräthylen od. dgl.) und in die Bohrungen wieder eingesetzt. Nach Verschluß der Enden, z.B. durch Aufschweißen einer Platte und Evakuieren wurde dieses Werkstück einer Warmverformung bzw. Querschnittsverringerung bei 1180 C, d.h. einem Warmschmieden, unterworfen. Es ergab sich das in Fig. 1b vergrößert dargestellte Verbundstahlwerkstück, bei dem die Kerne 2', 3' und die Trägerhülse 1 über einem Metallverbund zusammengehalten sind. Durch Anbringen von zwei weiteren sich überlappenden Bohrungen in den Kernen 2', 3' ergab sich eine Ausnehmung 3, die von einer Auskleidung 4 aus Kernmaterial umgeben ist.

Überraschenderweise zeigte sich, daß auch das Material der beiden Kerne trotz des hohen Kohlenstoffbzw. gegebenenfalls vorliegenden Carbidgehaltes einen Metallverbund eingeht. Die von zwei einander überlappenden Kreisen gebildete Ausnehmung 3, die von der Auskleidung 4 umgeben ist, die im Metallverbund mit der Trägerhülse 1 steht, wird von Material der beiden Kerne umschlossen; zwischen den Kernen wurde ein Metallverbund hergestellt, der zu einer einstückigen Auskleidung führte, welche ihrerseits über einen Metallverbund mit einer Trägerhülse 1 verbunden ist. Aufgrund dieses Aufbaues können die in den harten kohlenstoff- und/oder carbidreichen Auskleidungswerkstoff auftretenden Spannungen gut von dem zähen Legierungsmaterial der Trägerhülse 1 aufgenommen werden und Risse und Sprünge in der Auskleidung 4 vermieden werden. Da die Querschnittsverminderungen bei den Schmiede-, Press- oder Walzvorgängen gut beherrschbar sind, erfolgt die bei entsprechender Temperatur vorgenommene Verformung der in die Trägerhülse eingebrachten Kerne relativ gleichmäßig und es wird die Querschnittsform der Kerne annähernd bzw. gut beibehalten, so daß in ursprüngliche z.B. kreisförmigen Kernen kreisförmige Bohrungen eingebracht werden können, welche eine Auskleidung 4 von im wesentlichen regelmäßiger Dicke stehen lassen. Auf Grund des Zusammenwachsens der Kernteile 2', 3', und der Anpassung der unrunden Auskleidung 4 an die unrunde form der Auskleidung 3 werden Spannungen auf Grund ungleicher Dicke der Auskleidung 4 weitgehend vermieden bzw. gleichmäßig auf die Trägerhülse übertragen.

Fig. 2a zeigt einen Schnitt durch eine rechteckförmige Trägerhülse 1,in die mittig ein runder Kern 2 eingebracht ist. Durch eine Warmverformung der Trägerhülse 1 wird der in Fig. 2b gezeigte etwas quadratische Querschnitt der Trägerhülse mit einem langgestreckten bzw. oval bzw. elliptisch geformten Kern erreicht. In folgenden werden zwei überlappende Bohrungen vorgenommen und die Ausnehmung 3 hergestellt, wie sie z.B. für die Aufnahme einer Doppelschnecke für die Kunststoffverarbeitung benötigt wird.

Bevorzugterweise kann derart vorgegangen werden, daß man unter Zuhilfenahme der Formeln

$$K = \sqrt{\left[V\left(\frac{4 \times D + D^2 \pi}{\pi}\right)\right]} \qquad H = \frac{K \cdot S}{D} \qquad B = K + S - x - D$$

arbeitet, wobei

K = Kern Ø
x = Achsabstand

D = vergrößerter Bohr∅

V = Verschmiedungsgrad

H = Rohrmaßhöhe

B = Rohrmaßbreite

S = Seitenlänge des 4-kant nach Schmieden

bedeuten.

Fig. 3a zeigt eine zylindrische Trägerhülse 1, in die ein runder Kern 2 im wesentlichen konzentrisch eingesetzt ist. Es erfolgt z.B. durch Pressen bei erhöhter Temperatur, eine Verformung der Trägerhülse zu einem beidseitig abgeplatteten Zylinder. In dem ovalen bzw. langgestreckten Kern werden überlappende Ausnehmungen 3 eingebohrt, wie es in Fig. 3b dargestellt ist. Das in Fig. 3b dargestellte Verbundstahlwerkstück kann sodann zu dem in Fig. 3c dargestellten Werkstück abgedreht werden.

Es hat sich gezeigt, daß mit der erfindungsgemäßen Vorgangsweise in einfacher Weise unrunde bzw. außermittig liegende Ausnehmungen leicht und genau hergestellt werden können.

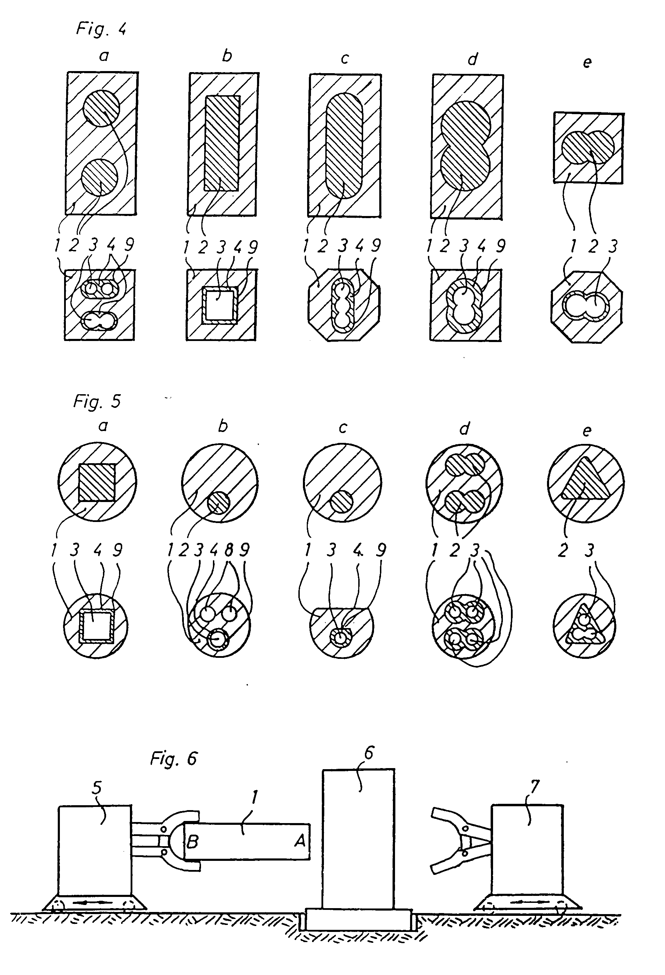

Üblicherweise erfolgt die Verformung bzw. Querschnittsverminderung der Werkstücke durch Schmieden, Pressen oder Walzen bei erhöhten Temperaturen. Wenn ein Verbundstahlwerkstück wie in der Fig. 1a dargestellt, geschmiedet werden soll, so wird dieses in einen Manipulator 5 eingespannt, wie in Fig. 6 dargestellt ist. Der Manipulator 5 führt das Werkstück 1 einer Langschmiedemaschine 6 zu, aus der es in einen weiteren Manipulator 7 gelangt; die Manipulatoren 5, 7 dienen zur Führung und Weiterbewegung bzw. Verdrehung des Werkstückes während des Langschmiedevorganges. Um nunmehr eine beim Schmieden mit manipulatoren in Langschmiedemaschinen hervorgerufene Verwindung des Werkstückes bzw. seines unrunden Kernes zu vermeiden, welcher Kern danach nicht ausbohrbar wäre, ist erfindungsgemäß vorgesehen, daß das Werkstück abwechselnd mit seinen Enden A und B der Langschmiedemaschine 6 zugeführt wird, d.h. das Werkstück wird nach jedem Stich um 180° gedreht und erneut der Schmiede zugeführt, womit unerwünschte Verwindungen des Kerns weitgehend vermieden werden. Die einzelnen Stiche laufen ferner unter gleichen Bedingungen, insbesondere mit gleichem Vorschub bzw. gleicher Verdrehung ab. Allerdings kann eine Variation der Querschnittsverminderung bzw. des Verformungsgrades vorgenommen werden, um die im vorangehenden Stich eingetretene Verformung bzw. Querschnittsänderung zu berücksichtigen, um in aufeinanderfolgenden Stichen tatsächliche gleiche Verformungen bzw. Querschnittsänderungen zu erhalten.

Vorteilhafterweise werden Schmiedepressen mit Ober-und Untergesenk oder Zwei-oder Mehrhämmerschmieden mit konischen Hämmern bzw. Pressen mit konischen Gesenken eingesetzt. Für eine Herstellung von langen Verbundstahlwerkstücken eignet sich insbesondere eine Querschnittsverringerung durch Walzen.

Fig. 4 zeigt verschiedene Ausgangsformen von mit Kernen 2 versehenen Trägerhülsen 1 in der oberen Reihe und in der unteren Reihe verschiedene nach der Querschnittsverminderung erhaltene Verbundstahlwerkstücke, in die Ausnehmungen 3 eingebracht sind, die von den Resten der Kerne 2 als Auskleidung 4 begrenzt sind. Das Verbundstahlwerkstück gemäß Fig. 4a zeigt zwei eingebrachte Kerne, die im Zuge der Verformung der Trägerhülse 1 zu einem Quadrat zu Ellipsen verformt wurden, in die zwei unabhängige bzw. zwei sich überlappende Ausnehmungen 3 eingebracht wurden.

Die rechteckige Trägerhülse gemäß Fig. 4b zeigt einen im wesentlichen rechteckigen Kern 2. Nach der Querschnittsreduktion wurde eine im wesentlichen rechteckige Ausnehmung 3, z.B. durch Funkenerosion, in das Kernmaterial eingearbeitet.

Das Verbundstahlwerkstück gemäß Fig. 4c zeigt eine rechteckige Trägerhülse 1, der ein ovaler bzw. langgestreckter Kern eingesetzt wurde; nach Ausbohren von drei sich überlappenden Ausnehmungen 3 ergab sich das dargestellte Werkstück.

Insbesondere aus Fig. 4d und 4e ist zu erkennen, daß die Form des in die Trägerhülse 1 eingebrachten Kernes und auch die Art der Querschnittsreduktion die Form der Auskleidung der Ausnehmung(en) im fertiggestellten Verbundstahlwerkstück beeinflussen. Man erkennt, daß bei dem in Fig. 4d dargestellten Verbundstahlwerkstück der Umfang der Auskleidung 4 der Form des Kernes 2 ähnlich ist, was sich auch bei dem Verbundstahlwerkstück gemäß Fig. 4c und 4e zeigte, die von einer rechteckigen bzw. quadratischen Form auf eine achteckige Form querschnittsverringert wurden.

Beim Schmieden der Trägerhülsen ist es bevorzugt, wenn ein Paar von ebenen Schmiedebacken und ein Paar von bombierten Schmiedebacken vorgesehen sind, wobei die bombierten Schmiedebacken insbesondere auf die zur Längserstreckung des bzw. der Kerne(s) parallelen Seiten einwirken.

Fig. 5 zeigt eine Ansicht von Verbundstahlwerkstücken, welche mit kreisförmigen Querschnitt aufweisenden Trägerhülsen 1 hergestellt wurden. Fig. 5a zeigt eine Trägerhülse mit einem rechteckigen Kern, in dem nach Verformung bzw. Herstellung des Metallverbundes eine rechteckige Ausnehmung 3 ausgebildet wurde. Das Verbundwerkstück gemäß Fig. 5b wurde aus einer Trägerhülse 1 ausgebildet, in die asymme-

<div align="center">4</div>

trisch ein kreisförmiger Kern eingebracht wurde. Nach der Querschnittsverringerung bei erhöhter Temperatur und dem Bohrvorgang ergab sich eine asymmetrisch liegende, im wesentlichen kreisförmige Ausnehmung 3, die von einer Auskleidung 4 umgeben war. Zusätzliche Ausnehmungen 8, allerdings ohne Auskleidung, wurden nachträglich in die Trägerhülse 1 eingebracht. Das Verbundstahlwerkstück gemäß Fig. 5c wurde ausgehend von einem asymmetrisch liegenden kreisförmigen Kern hergestellt; eine asymmtrische Querschnittsverrringerung der Trägerhülse 1 ergab eine asymmtrische Form der Auskleidung 4 der im Kernmaterial hergestellten Ausnehmung 3.

Wie das Verbundstahlwerkstück gemäß Fig. 5d zeigt, ist es auch möglich, bei kreisförmigen Trägerhülsen 1 mehrere Kerne 2 einzusetzen, die selbst wiederum von mehreren Bauteilen gebildet sind, und diese nach Verformung mit einander überlappenden oder voneinander getrennten Ausnehmungen 3 zu versehen. Das Verbundstahlwerkstück gemäß Fig. 5e umfaßt eine Trägerhülse 1 mit einem eingesetzten dreieckförmigen Kern 2, in den nach Verformen Ausnehmungen 3 eingebracht wurden.

Werden in eine Trägerhülse zum Einbringen der Kerne oder in die verformten Kerne zum Einbringen der Ausnehmungen 3 zwei oder mehr überlappende Bohrungen eingebracht, so wird bevorzugterweise derart vorgegangen, daß zuerst eine Bohrung gefertigt wird, daraufhin in diese Bohrung ein Kern eingesetzt wird, daraufhin die zweite Bohrung fertiggestellt wird, und in diese ein den ersten teilweise abgearbeiteten Kern ergänzender Kern eingesetzt wird. Der erste Kern muß dabei gegen Verdrehung, z.B. mit einer an der Grenzfläche zwischen Kern und Trägerhülse ausgebildeten Paßbohrung und eingesetztem Paßbolzen und gegen Verschiebung gesichert werden, z.B. durch eine an der Grenzfläche ausgebildete Bohrung mit einer eingedrehten Schraube. Ein Schweißen ist zur Sicherung der Kerne nicht möglich, wenn ein oder mehrere härtbare Stähle verwendet werden. Da unter Verwendung von Bohröl gebohrt wird, müssen die Kerne vor Ausbildung der Metallverbindung gereinigt werden,ebenso wie die Innenfläche der Trägerhülse. Um die Kerne während der Warmverformung vor einer Oxidation zu schützen, werden die Endflächen der Verbundstahlwerkstücke vor dem Verformungsvorgang verschlossen.

Das Warmschmieden bzw. Pressen bzw. Walzen zur Herstellung des Metallverbundes erfolgt bei Temperaturen zwischen 1000 und 1260 °C, insbesondere zwischen 1170 und 1190 °C.

Die Möglichkeit der Variation der Lage des Kernes in Bezug auf den Mittelpunkt oder die Außenfläche der Trägerhülse ist insbesondere von Wichtigkeit, wenn das fertiggestellte Verbundstahlwerkstück einer z.B. mechanischen Abarbeitung unterworfen werden soll, um z.B. für seine gedachte Verwendung am Umfang Kühl-,Heiz- oder Halteeinrichtungen anbringen zu können. Die Möglichkeit, den Kern in Bezug auf den Mittelpunkt bzw. die Außenfläche der Trägerhülse in beliebige Position festzulegen und damit richtungsorientiert gute Festigkeitseigenschaften des Verbundstahlzylinders zu erreichen, war bislang nicht bekannt bzw. aufgrund der auftretenden Spannungen in der Trägerhülse und Auskleidung nicht herstellbar. Es wird erfindungsgemäß möglich, ungleichförmige Ausnehmungen, insbesondere von Kreisform abweichende Ausnehmungen 3, mit einer relativ dünnen Auskleidung 4 herzustellen, womit die Verzugsgefahr bei Temperaturänderungen und die Bruchgefahr von zu dicken Auskleidungen bzw. von zu dicken Stellen der Auskleidungen im Betrieb beseitigt werden, wie sie z.B. auftreten, wenn in einen kreisförmigen Kern eine langgestreckte Ausnehmung eingebracht würde.

Sofern es sich nicht um kreisförmige Kerne handelt, welche in Bohrungen der Trägerhülse eingesetzt werden können, könnten in der Trägerhülse, z.B. durch Formschneiden, entsprechende quadratische, rechteckige oder anders geformte Ausnehmungen ausgebildet werden, in die passende, z.B. durch Strangpressen od. dgl. hergestellte, ebenfalls quadratische, rechteckige oder anders geformte Kerne eingesetzt werden können.

Die in die Verbundstahlwerkstücke eingebrachten Ausnehmungen 3 können z.B. auch einen sich in Längsrichtung konisch verjüngenden Querschnitt aufweisen; dies wird erreicht, indem man z.B. abgestufte Bohrungen einbringt, die sodann konisch ausgedreht werden.

Vorteilhaft ist es, wenn die Trägerhülse 1 aus einer schmied-und vergütbaren Legierung hoher Festigkeit und Zähigkeit, z.B. Baustahl oder Einsatzstahl, besteht und die Auskleidung 4 von einer schmiedbaren und vergütbaren, vorzugsweise verschleiß-und/oder korrosionsbeständigen, Legierung, z.B. ledeburitischem Chromstahl, vorzugsweise mit zumindest 11 % Cr, insbesondere zumindest 14 % Cr und zumindest 1 %, vorzugsweise zumindest 1,8 bzw. 2,3 % C, gebildet ist, und wenn die Trägerhülse 1 mit der Auskleidung 4 zur Ausbildung des Metallverbundes zwischen diesen Legierungen durch Querschnittsreduktion verformt ist. Diese Stähle besitzen jeweils entsprechende Härte und Zähigkeit, um einander optimal zu unterstützen, insbesondere ist auch die Ausbildung eines Metallverbundes zwischen diesen Legierungen gut möglich. Ebenfalls lassen sich diese Legierungen bei gewissen Temperaturen miteinander gut verformen und das hergestellte Verbundstück kann anschließend gut gehärtet werden. Es versteht sich, daß auch durch Zusatz eines oder mehrerer Legierungselemente gebildete Modifikationen dieser genannten Legierungstypen einsetzbar sind, wobei als Zusatzelemente für die ledeburitischen Cr-Stähle insbesondere Mo, V, W und Co bis insgesamt etwa 12 % und für die nicht rostenden Cr-Stähle insbesondere Mo, Ni, V, W, Co, Ti, Nb bis insgesamt etwa 6 % zu nennen sind.

**Patentansprüche**

1. Verbundstahlwerkstück bzw. Maschinenteil mit zumindest einer in Längsrichtung verlaufenden Ausnehmung, umfassend eine vorzugsweise zumindest über einen Teil ihrer Außenfläche zylindrisch geformte Trägerhülse und eine die Ausnehmung(en) entlang ihres Umfanges begrenzende verschleiß- und/oder korrosionsbeständige Auskleidung, welche unter Ausbildung eines z.B. durch Pressen, Schmieden, Walzen od. dgl. hergestellten Metallverbundes bzw. einer metallischen Bindung mit der Trägerhülse verbunden ist( sind), dadurch gekennzeichnet, daß insbesondere zur Ausbildung eines Doppel-oder Mehrfachschneckenzylinders für die Kunststoffverarbeitung, die im Verbundstahlwerkstück ausgebildete Ausnehmung (3) eine von Kreisform abweichende Querschnittsform, z.B. die Form von zwei sich überlappenden Kreisen, aufweist und daß die Metallverbundfläche (9) zwischen der ebenfalls im Schnitt von Kreisform abweichenden Auskleidung (4) und der Trägerhülse (1) längs ihres Umfanges unterschiedliche Normalabstände von der Umfangsfläche der Trägerhülse (1) besitzt oder daß die im Verbundstahlwerkstück ausgebildete kreisförmige Ausnehmung (3) in Bezug auf die Mitte der Trägerhülse (1) exzentrisch angeordnet ist und die Metallverbundfläche (9) zwischen der ebenfalls im Schnitt Kreisform aufweisenden Auskleidung (4) und der Trägerhülse (1) längs ihres Umfanges unterschiedliche Normalabstände von der Umfangsfläche der Trägerhülse (1) besitzt.

2. Verbundstahlwerkstück nach Anspruch 1, dadurch gekennzeichnet, daß die Ausnehmung (3) die Auskleidungen (4) bezüglich ihres Mittelpunktes zentrisch symmetrisch sind oder eine gerade Anzahl von Symmetrieachsen besitzen, insbesondere zweiachsig symmetrisch sind.

3. Verbundstahlwerkstück nach einem der Ansprüche 1 oder 2, dadurch gekennzeichnet, daß die Metallverbundfläche (9) im Schnitt im wesentlichen der Form der von ihr umgebenden Ausnehmung (3) entspricht bzw. daß die Dicke der Auskleidung (4) längs des Umfanges der Ausnehmung (3) möglichst gleich gehalten ist.

4. Verbundstahlwerkstück nach einem der Ansprüche 1 bis 3, dadurch gekennzeichnet, daß die Ausnehmungen (3) und/oder die Auskleidungen (4) bezüglich des Mittelpunktes der Trägerhülse (1) zentrische Symmetrie aufweist(en).

5. Verbundstahlwerkstück nach einem der Ansprüche 1 bis 4, dadurch gekennzeichnet, daß die Trägerhülse (1) aus einer schmied- und vergütbaren Legierung, z.B. Baustahl oder Einsatzstahl, besteht und die Auskleidung (4) von einer schmiedbaren und vergütbaren, vorzugsweise verschleiß-und/oder korrosionsbeständigen, Legierung, z.B. ledeburitischem Chromstahl, vorzugsweise mit zumindest 11 % Cr, insbesondere zumindest 14 % Cr. und zumindest 1 %, vorzugsweise zumindest 1,8% bzw. 2,3 % C, gebildet ist, und daß die Trägerhülse (1) mit der Auskleidung (4) zur Ausbildung des Metallverbundes zwischen diesen Legierungen durch Querschnittsreduktion verformt.

6. Verfahren zur Herstellung eines Verbundstahlwerkstückes bzw. Maschinenteiles insbesondere nach einem der Ansprüche 1 bis 5, bei dem der Maschinenteil in Längsrichtung mit zumindest einer Ausnehmung versehen wird, welche Ausnehmung in einem verschleiß- und/oder korrosionsbeständigen Kernteil zur Bildung einer Auskleidung erstellt ist, die unter Ausbildung eines Metallverbundes mit der Trägerhülse verbunden ist, dadurch gekennzeichnet, daß, insbesondere zur Ausbildung eines Doppel- oder Mehrfachschneckenzylinders für die Kunststoffverarbeitung, an der(n) Stelle(n) der gewünschten Ausnehmung(en) im Verbundstahlwerkstück bzw. Maschinenteil der Rohling mit zumindest einem Kern versehen und gemeinsam mit dem(n) Kern(en) einer Warmverformung, insbesondere Querschnittsverringerung, bei erhöhter Temperatur, unterworfen wird, bei welcher dem(n) Kern(en) in der Trägerhülse eine von Kreisform abweichende Querschnittsform erteilt oder ein kreisförmiger Kern mit einer bezüglich des Mittelpunktes der Trägerhülse exzentrischen bzw. bezüglich der Umfangsfläche der Trägerhülse unterschiedliche Abstände besitzenden Lage hervorgeht und daß in dem(n) Kern(en) die Ausnehmung(en) ausgebildet wird(werden).

7. Verfahren nach Anspruch 6, dadurch gekennzeichnet, daß in einem, vorzugsweise im wesentlichen quadratischen oder runden Querschnitt besitzenden Rohling des Maschinenteiles ein einen von Kreisform abweichenden Querschnitt aufweisendes Hohl, z.B. in elliptischer Form, in Form von sich überlappenden Kreisen od.dgl. , ausgebildet wird, daß das Hohl mit zumindest einem Kern gefüllt wird, daß die Trägerhülse mit dem Kern einer Querschnittsveränderung bei erhöhter Temperatur unter möglichst guter Beibehaltung der Form des Außenquerschnittes unterworfen wird und daß in dem(n) im Hohl angeordneten Kern(en) die gewünschte(n) Ausnehmung(en) ausgebohrt wird(werden).

**8.** Verfahren nach Anspruch 6, dadurch gekennzeichnet, daß in einem, insbesondere rechteckförmigen oder runden Querschnitt aufweisenden Rohling des Maschinenteiles ein kreisförmiges, quadratisches oder rechteckiges Hohl mit einem Kern gefüllt wird, daß die Trägerhülse mit Kern einer Querschmittsreduktion bei erhöhter Temperatur unterworfen wird, mit der der Kern zu einer von Kreisform abweichenden, z.B. annähernd elliptischem Form, verformt wird und daß im Kern die Ausnehmungen, insbesondere einander überlappender Bohrungen, ausgebildet werden.

**9.** Verfahren nach einem der Ansprüche 6 bis 8, dadurch gekennzeichnet, daß die Querschnittsverminderung bei erhöhter Temperatur in einer geradzahlingen Anszahl von Stichen im einer Schmiedemaschine, insbesondere Langschmiedemaschine, erfolgt. wobei nach jedem Stich ein Umdrehen des Werkstückes um 180 ° erfolgt bzw. bei dem aufeinanderfolgenden Stich abwechselnd mit dem Anfang und den Ende des Werkstückes begonnen wird.

**10.** Verfahren nach Anspruch 9, dadurch gekennzeichnet, daß der Trägerhülse im jeweils zwei aufeinander folgendem Stichen eine im wesentlichen gleiche Querschnittsabnahme oder im wesentlichen derselbe Verformungsgrad erteilt wird.

**11.** Verfahren nach einem der Ansprüche 6 bis 10, dadurch gekennzeichnet, daß die Trägerhülse (1) aus einer schmied- und vergütbaren Legierung, z.B. Baustahl oder Einsatzstahl, besteht und die Auskleidung (4) von einer schmiedbaren und vergütbaren, vorzugsweise verschleiß- und/oder korrosionsbeständigen Legierung, z.B. ledeburitischem Chromstahl, vorzugsweise mit zumindest 11 % Cr, insbesondere zumindest 14 % Cr und zumindest 1 %, vorzugsweise zumindest 1,8 bzw. 2.3 %, C gebildet ist, und daß die Trägerhülse (1) mit der Auskleidung (4) zur Ausbildung des Metallverbundes zwischen diesen Legierungen durch Querschnittsreduktion bei erhöhter Temperatur verformt ist.

**12.** Verfahren nach einem der Ansprüche 6 bis 11, dadurch gekennzeichnet, daß die Querschnittsabnahme im Zuge der Warmverformung zumindest 20 % beträgt.

**13.** Verfahren mach einem der Ansprüche 6 bis 12, dadurch gekennzeichnet, daß die Querschnittreduktion bei Temperaturen von 1000 - 1260 ° C , insbesondere durch Schmieden, Walzen oder Pressen erfolgt.

## Claims

**1.** A compound steel workpiece or machine part with at least one recess extending in the longitudinal direction, comprising a carrier sleeve which is preferably cylindrical over at least part of its outer surface, and a wear-resistant and/or corrosion-resistant lining delimiting the recess(es) along its(their) periphery and being connected to the carrier sleeve to form a metal compound or a metallic bond therewith, produced e.g. by pressing, forging, rolling or the like, **characterised in that** the recess (3) formed in the compound steel workpiece has a non-circular cross-sectional shape, e.g. the shape of two overlapping circles, in particular to form a double or multiple spiral cylinder for processing plastics, and **in that** the metal compound surface (9) between the lining (4), which is likewise non-circular in cross-section, and the carrier sleeve (1) is spaced at different normal distances from the peripheral surface of the carrier sleeve (1) along its periphery, or **in that** the circular recess (3) formed in the compound steel workpiece is arranged eccentrically relative to the centre of the carrier sleeve (1), and the metal compound surface (9) between the lining (4), which is likewise circular in cross-section, and the carrier sleeve (1) is spaced at different normal distances from the peripheral surface of the carrier sleeve (1) along its periphery.

**2.** A compound steel workpiece according to Claim 1, **characterised in that** the recess (3) [and] the linings (4) are centrally symmetrical relative to their central point or have an even number of axes of symmetry, in particular are biaxially symmetrical.

3. A compound steel workpiece according to Claims 1 or 2, **characterised in that** the cross-section of the metal compound surface (9) corresponds substantially to the shape of the recess (3) surrounded thereby, and/or **in that** the thickness of the lining (4) along the periphery of the recess (3) is kept as uniform as possible.

4. A compound steel workpiece according to any one of Claims 1 to 3, **characterised in that** the recesses (3) and/or the linings (4) are centrally symmetrical relative to the central point of the carrier sleeve (1).

5. A compound steel workpiece according to any one of Claims 1 to 4, **characterised in that** the carrier sleeve (1) consists of a forgeable and heat-treatable alloy, e.g. structural steel or case hardening steel, and the lining (4) is formed by a forgeable and heat-treatable, preferably wear-resistant and/or corrosion-resistant alloy, e.g. ledeburitic chrome steel, preferably with at least 11 % Cr, in particular at least 14 % Cr, and at least 1 %, preferably at least 1.8 % or 2.3 % C, and **in that** the carrier sleeve (1) with the lining (4) is deformed by reduction of its cross-sectional area to form the metal compound between these alloys.

6. A process for the manufacture of a compound steel workpiece or machine part, in particular according to any one of Claims 1 to 5, in which the machine part is provided with at least one recess in the longitudinal direction, which recess is provided in a wear-resistant and/or corrosion-resistant core part forming a lining which is connected to the carrier sleeve to form a metal compound therewith, **characterised in that** the blank is provided with at least one core at the point(s) of the desired recess-(es) in the compound steel workpiece or machine part, in particular to form a double or multiple spiral cylinder for processing plastics, and together with the core(s) is subjected to hot deformation, in particular reduction of its cross-sectional area, at an elevated temperature, during which the core(s) in the carrier sleeve is(are) given a non-circular cross-sectional shape, or a circular core is produced with a position which is eccentric relative to the central point of the carrier sleeve and/or is spaced at different distances relative to the peripheral surface of the carrier sleeve, and **in that** the recess(es) is-(are) formed in the core(s).

7. A process according to Claim 6, **characterised in that** a cavity with a non-circular cross-section, e.g. in elliptical form, in the form of overlapping circles or the like, is formed in a blank of the machine part, which blank preferably has a substantially square or round cross-section, **in that** the cavity is filled with at least one core, **in that** the carrier sleeve with the core is subjected to a change of cross-section at an elevated temperature, whilst retaining the shape of the outer cross-section as far as possible, and **in that** the desired recess(es) is(are) bored in the core(s) arranged in the cavity.

8. A process according to Claim 6, **characterised in that**, in a blank of the machine part, particularly one having a rectangular or round cross-section, a circular, square or rectangular cavity is filled with a core, **in that** the carrier sleeve with the core is subjected to a reduction of its cross-section at an elevated temperature, where the core is deformed into a non-circular, e.g. approximately elliptical shape, and **in that** the recesses, in particular overlapping boreholes, are formed in the core.

9. A process according to any one of Claims 6 to 8, **characterised in that** the reduction of the cross-section takes place at an elevated temperature in an even number of passes in a forging machine, in particular a longitudinal forging machine, the workpiece being rotated by 180° after each pass and the process starting at the beginning and the end of the workpiece alternately during each successive pass.

10. A process according to Claim 9, **characterised in that** the carrier sleeve undergoes a substantially equal reduction of its cross-section or substantially the same degree of deformation in each two successive passes.

11. A process according to any one of Claims 6 to 10, **characterised in that** the carrier sleeve (1) consists of a forgeable and heat-treatable alloy, e.g. structural steel or case hardening steel, and the lining (4) is formed by a forgeable and heat-treatable, preferably wear-resistant and/or corrosion-resistant alloy, e.g. ledeburitic chrome steel, preferably with at least 11 % Cr, in particular at least 14 % Cr and at least 1 %, preferably at least 1.8 or 2.3 % C, and **in that** the carrier sleeve (1) with the lining (4) is deformed by reduction of its cross-section at an elevated temperature to form the metal compound between these alloys.

**12.** A process according to ally one of Claims 6 to 11, **characterised in that** the reduction of cross-section in the course of hot deformation is at least 20%.

**13.** A process according to any one of Claims 6 to 12, **characterised in that** the reduction of the cross-section takes place at temperatures of 1000 - 1260 °C, in particular by forging, rolling or pressing.

**Revendications**

**1.** Une pièce en acier composite ou également une pièce de machine présentant au moins un évidement s'étendant dans le sens longitudinal, comprenant un tube support de forme cylindrique de préférence au moins sur une partie de sa surface externe, et un revêtement résistant à l'usure et/ou à la corrosion délimitant le ou les évidements le long de sa circonférence, le(s) revêtement(s) étant lié(s) au tube support par constitution d'une liaison entre métaux ou liaison métallique obtenue, par exemple par matriçage, forgeage, laminage, etc., caractérisée en ce que, en particulier pour constituer un cylindre hélicoïdal à vis double ou multiple pour la fabrication du plastique, l'évidement (3) formé dans la pièce en acier composite présente en coupe transversale une forme s'écartant de la forme circulaire, par exemple la forme de deux cercles qui se chevauchent, et en ce que la surface de la liaison métallique (9) entre le tube support (1) et le revêtement (4) dont la section s'écarte également de la forme circulaire est située le long de sa circonférence à une distance variable de la surface externe du tube support (1) ou bien en ce que l'évidement de forme circulaire (3) formé dans la pièce en acier composite est disposé de façon excentrique par rapport au milieu du tube support (1) et en ce que la surface de la liaison métallique (9) entre le tube support (1) et le revêtement (4) dont la section s'écarte également de la forme circulaire est située le long de sa circonférence à une distance variable de la surface externe du tube support (1).

**2.** Une pièce en acier composite selon la revendication 1, caractérisée en ce que les revêtements (4) sont disposés symétriquement par rapport au milieu de l'évidement (3) ou bien possèdent un nombre pair d'axes de symétrie, et sont en particulier symétriques par rapport à deux axes.

**3.** Une pièce en acier composite selon l'une des revendications 1 ou 2, caractérisée en ce que la surface de la liaison métallique (9) correspond sensiblement en coupe à la forme de l'évidement qu'elle entoure ou également en ce que l'épaisseur du revêtement (4) est maintenue la plus constante possible le long de la circonférence de l'évidement (3).

**4.** Une pièce en acier composite selon l'une des revendications 1 à 3, caractérisée en ce que l'évidement (3) et/ou les revêtements (4) présente(nt) une symétrie par rapport au centre du tube support (1).

**5.** Une pièce en acier composite selon l'une des revendications 1 à 4, caractérisée en ce que le tube support (1) est constitué par un alliage susceptible d'être forgé et de subir un traitement de trempe et de revenu, par exemple de l'acier de construction ou de l'acier de cémentation, en ce que le revêtement (4) est constitué par un alliage susceptible d'être forgé et de subir un traitement de trempe et de revenu, de préférence résistant à l'usure et/ou à la corrosion, par exemple de l'acier lédeburitique au chrome, de préférence avec au moins 11 % de Cr, en particulier au moins 14 % de Cr, et au moins 1 %, de préférence au moins 1,8 % ou également 2,3 % de C, et en ce que le tube support (1) est soumis avec le revêtement (4) à une déformation afin de constituer la liaison métallique entre ces alliages par réduction de la section transversale.

**6.** Un procédé pour la fabrication d'une pièce en acier composite ou également d'une pièce de machine en particulier selon l'une des revendications 1 à 5, dans lequel la pièce de machine présente au moins un évidement s'étendant dans le sens longitudinal, ledit évidement étant formé à l'intérieur d'une pièce centrale résistant à l'usure et/ou à la corrosion pour constituer un revêtement, qui est relié au tube support par constitution d'une liaison métallique, caractérisé en ce que, en particulier pour constituer un cylindre hélicoïdal à vis double ou multiple pour la fabrication du plastique, à l'endroit (ou aux endroits) souhaité(s) de l'évidement (ou des évidements) de la pièce en acier composite ou de la pièce de machine, l'élément tubulaire comporte au moins un noyau et est soumis avec le(s) noyau(x) à une déformation à chaud, en particulier à une réduction de la section transversale à température élevée, à la suite de quoi la section transversale du (ou des) noyau(x) à l'intérieur du tube support s'écarte de la forme circulaire, ou bien la pièce centrale de forme circulaire se trouve excentrée par rapport au milieu du tube support et/ou également prend une position située à une distance variable par rapport à la surface externe du tube support, et en ce que l'évidement (ou les évidements) est (sont) formé(s) à l'intérieur du (ou des) noyau(x).

7.  Un procédé selon la revendication 6, caractérisé en ce que, dans un élément tubulaire de la pièce de machine présentant de préférence une section sensiblement quadrangulaire ou circulaire, est formée une cavité présentant une forme s'écartant de la forme circulaire, par exemple de forme elliptique, ou selon deux cercles qui se chevauchent, en ce que la cavité est remplie par au moins un noyau, en ce que le tube support est soumis avec le noyau à une modification de section transversale à température élevée en maintenant le mieux possible la forme de la section extérieure et en ce que l'on obtient l'évidement (ou les évidements) souhaité(s) par perçage du ou des noyau(x) situé(s) dans la ou les cavité(s).

8.  Un procédé selon la revendication 6, caractérisé en ce que, dans un élément tubulaire de la pièce de machine présentant en particulier une section quadrangulaire ou circulaire, une cavité ayant une forme circulaire quadrangulaire ou rectangulaire est remplie avec un noyau, en ce que le tube support est soumis avec le noyau à une réduction de section transversale à température élevée, par laquelle le noyau prend une forme s'écartant de la forme circulaire, par exemple voisine de la forme elliptique, et en ce que les évidements sont formés dans le noyau, en particulier par des perçages qui se chevauchent.

9.  Un procédé selon l'une des revendications 6 à 8, caractérisé en ce que la réduction de section à température élevée est effectuée par un nombre pair de passes dans une machine à forger, en particulier dans une machine à forger en bout, la pièce étant tournée de 180 ° après chaque passe, ou également en commençant alternativement à chaque passe par le début puis par la fin de la pièce.

10. Un procédé selon la revendication 9, caractérisé en ce que le tube support est soumis à chaque fois lors de deux passes consécutives à une réduction de section transversale sensiblement identique ou à un taux de déformation sensiblement identique.

11. Un procédé selon l'une des revendications 6 à 10, caractérisé en ce que le tube support (1) est constitué par un alliage susceptible d'être forgé et de subir un traitement de trempe et de revenu, par exemple de l'acier de construction ou de l'acier de cémentation, et en ce que le revêtement (4) est constitué par un alliage susceptible d'être forgé et de subir un traitement de trempe et de revenu, de préférence résistant à l'usure et/ou à la corrosion, par exemple de l'acier lédeburitique au chrome, de préférence avec au moins 11 % de Cr, en particulier au moins 14 % de Cr, et au moins 1 %, de préférence au moins 1,8 % ou également 2,3 % de C, et en ce que le tube support (1) est soumis avec le revêtement (4) à une déformation afin de constituer la liaison métallique entre ces alliages par réduction de la section transversale à température élevée.

12. Un procédé selon l'une des revendications 6 à 11, caractérisé en ce que la réduction de la section transversale par suite de la déformation à chaud est d'au moins 20 %.

13. Un procédé selon l'une des revendications 6 à 12, caractérisé en ce que la réduction de la section transversale est obtenue à des températures de 1000 °C à 1260 °C, en particulier par forgeage, laminage ou matriçage.

Fig. 1a

Fig. 1b

Fig. 1c

Fig. 2a

Fig. 2b

Fig. 3a

Fig. 3b

Fig. 3c

Fig. 4

Fig. 5

Fig. 6